(19) Europäisches Patentamt
European Patent Office
Office européen des brevets

(11) **EP 2 458 526 A1**

(12) **EUROPEAN PATENT APPLICATION**

(43) Date of publication:
**30.05.2012 Bulletin 2012/22**

(51) Int Cl.:
***G06K 7/08*** *(2006.01)*     ***G06K 19/067*** *(2006.01)*

(21) Application number: **10193023.8**

(22) Date of filing: **29.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Printechnologics GmbH**
**09112 Chemnitz (DE)**

(72) Inventors:
• **Förster, Matthias**
**01307 Dresden (DE)**

• **Voigt, Sascha**
**09337 Bernsdorf (DE)**
• **Thiele, Jan**
**09127 Chemnitz (DE)**
• **Kreutzer, André**
**09648 Mittweida (DE)**

(74) Representative: **Lange, Sven**
**Hertin**
**Anwaltssozietät**
**Kurfürstendamm 54-55**
**10707 Berlin (DE)**

(54) **System and method for retrieving information from a data carrier**

(57)     The present invention relates to detection device having a touch screen, wherein the detection device is adapted to decode information upon interaction of the touch screen with an information carrier comprising a dielectric and/or conductive pattern which encodes the information, wherein the interaction is based on a difference in the dielectric coefficient and/or conductivity of the pattern. The invention further relates to a method with steps of providing one or more information carrier(s) with a dielectric and/or conductive pattern and a detection device having a touch screen, and inducing an interaction between the information carrier and the touch screen, wherein the interaction is based on a difference in the dielectric coefficient and/or the conductivity of the pattern.

**Fig. 21a**

**(Cont. next page)**

**Fig. 21b**

**Fig. 21c**

**Description**

Technical Field

The present invention generally refers to a system comprising an information carrier and a detection device having a touch screen, and a method to read out the information on the information carrier with the detection device.

Background of the Invention

During the past decades, there has been a rapid development in data processing and storing. In the field of information technology, a multitude of media to store information has been developed. They include floppy disks, compact disks (abbreviated as CD's), digital versatile disks (known as DVD's), USB flash drives, multitude of data cards and numerous other devices.

However, these devices storing information have several properties limiting their field of application.

Compared to classical data storage (such as printed information) they are much more complex and therefore harder to produce. This makes them less economic in certain applications. It is for example hard to imagine that these devices could replace bar codes placed on articles in a department store. Though all these devices can easily perform the task of storing the (very limited) amount of data for the article (e.g. name of article, price, serial number, date of expiry, etc.), they are too complex and thus expensive to be used in such an environment.

However, there may be other applications where a data-storage device encoding the data in an optical pattern (e.g. the said barcode) is not desirable. Though it is simple and therefore cheap to produce, it has the disadvantage that only a very limited amount of data may be encoded with it.

Moreover, it is generally easy to counterfeit a bar code, which makes it much less safe than more sophisticated data storage devices. One reason for this is the fact that the information is encoded in a visible pattern. Thus, copying the barcode may be enough to generate a counterfeit.

Another disadvantage of the optical pattern lies in the fact that deviations of the surface where the optical pattern is applied to (e.g. scratches and the like) may lead to malfunctions.

The relatively new technology disclosed in WO 2010/043422 and WO 2010/051802 overcomes the disadvantages of the established prior art mentioned above. The basic idea of the information carriers presented in these two publications is to use information carriers comprising a pattern of conductive and non-conductive regions.

In comparison to storing the information in an optical pattern, this technology has the advantage of being a lot harder to copy (and counterfeit). Moreover, the pattern of conductive and non-conductive regions might not lie on the surface of the information carrier. Thus, these information carriers are much more resistant to external influences, including, but not limited to, physical stress, scratches, humidity and the like.

At the same time, they can be produced in simple processes - thus making them much cheaper and more economic as the more complex devices mentioned above. The fact that they are less complex further enables them to be used in a multitude of applications.

However, for certain applications a potential disadvantage of the information carriers described in WO 2010/043422 and WO 2010/051802 may be seen in that specific devices are needed to read out and decode the information stored on these information carriers (this is in fact a disadvantage of all data storage devices mentioned above). These devices are thus specially designed and optimized for the corresponding information carrier (s), which adds costs to the decoding method and system and makes it more expensive for the user.

During the rise of information technology, there has also been a rapid development in the sector of personal computers, laptops, smart phones, tablet computers and the like. In these devices, the usage of touch screens has become more common over the last years. Touch screens usually allow the user to induce an input by touching a designated area of these devices.

There are different technologies for these touch screens to operate, including resistive, capacitive, acoustic wave and infrared technologies. All these technologies are optimized to detect a human finger or a specially designed stylus that is brought into contact with the touch screen.

According to recent developments, systems including touch screens can also be used to recognize certain shapes of inanimate objects. For example, US 2010/0045627 discloses placing a specifically shaped object (a so-called signet) onto a touch screen, wherein the system will then compare the shape of this signet with shapes stored in a database. In case there is a match between the presented shape and a shape in the database, it will perform an action. Examples for these actions include giving access to restricted areas of a computer system, logging onto a certain user profile of a computer system and the like.

However, the technology disclosed in US 2010/0045627 has several major drawbacks. First, this technology is limited to signets that are recognized by a pre-stored database. Thus, the system only works and performs certain actions if it recognizes a known object. Thus, this technology is limited in its usability, in particular with regard to interpreting shapes that are new to the system. Thus, these systems cannot be used to read out and decode encoded information being new to the system. This means in particular that the technology disclosed in US 2010/0045627 does not allow the touch screen to be an input device for information carriers new to the system.

Second, the technology disclosed in US 2010/0045627 entirely relies on the shape of the objects. The touch screen proposed in US 2010/0045627 for shape recognition is particularly optimized for an input signal being pressure imposed by a human finger or a stylus. However, the shape of an object is generally visible to the naked eye and furthermore detectable by touch.

There are numerous applications where these properties are disadvantageous. Likewise, it is desirable to establish a technology in which the touch screen can be used as an input device for structures prior not known by the system.

Summary of the Invention

It is therefore an object of the present invention to provide a detection device and a system and method which overcome the mentioned disadvantages. This object is achieved by a detection device, a system and a method according to the independent claims.

Useful for the present invention is particularly an information carrier comprising a substrate comprising a first, non-conductive material; one or more conductive regions comprising a second, conductive material, wherein the substrate and the one ore more regions form a pattern encoding information; and a coupling area of a third, conductive material, wherein at least one of the conductive regions is electrically connected to the coupling area via at least one conductive path.

In the context of the present disclosure, an information carrier may be any object. The information carrier carries encoded information which can be simple, signed and/or encrypted. A simple information carrier may induce events in a device it is connected to and/or in a program (that is, preferably locally in a device). A signed information carrier may further induce events in an external system to manipulate data, which is connected via a data network. An encrypted information carrier may be decrypted locally by a program and/or by an external data processing system and may then induce events in the program flow of the device and/or in the external data processing system.

Examples of objects include, but are not limited to, playing cards, business cards, credit cards, debit cards, stamps, signatures, postcards, (entrance) tickets and generally admission to restricted areas (both physical areas and virtual zones), member cards, tickets valid for a limited time, certificates (e.g., proving the origin of an object), bill of delivery and/or sale, abstracts of accounts, instruction leaflets, vouchers (e.g. for objects in computer games and/or downloads of music, videos, e-books) and the like, but also any common products such as cups, glasses, consumer packaged goods, consumables and pre-products. The substrate of the information carrier may consist of these objects or may be attached to these objects in any suitable manner.

The information carrier for use with the present invention provides several advantages over the prior art. For example, an information carrier comprising and/or encoding multiple information types may be provided in a simple and cost efficient manner. Multiple information may be used to provide for redundancy, different ranges of readability and reader-adapted functionalities (such as optic, capacitive and the like). In other words, one and the same information carrier may comprise information which can be read optically and capacitively or different bits of the information may have a different operating distance and may thus be read with different reading devices.

The substrate may be rigid or flexible. Preferably, the substrate comprises one or more of the following materials: plastics, synthetic materials, paper, carton, (derived) timber products, composite materials, ceramics, glass, cloths, textiles, leather or any combination of the mentioned materials.

In the context of the present disclosure, region (which may also be referred to as domains, structures, areas, portions, parts, divisions and/or zones) refers to any shape, which may be one-dimensional (i.e. points or lines), two-dimensional (i.e. areas of a particular shape) and/or three-dimensional (i.e. areas with a particular height), wherein generally two-dimensional shapes are preferred. Examples may include (but are not limited to) squares, circles, triangles, rectangles, dots, pixels and lines. Preferably, the following properties of these regions may be used to encode information: shape, orientation, number, distance between regions and/or relative position between regions.

The coupling area preferably is an area of generally conductive material on the information carrier itself or coupled to the information carrier and electrically linked via conductive path(s) to one or more of the conductive regions such that the linked region(s) have the same electric potential as the coupling area. The coupling area is preferably easily accessible by a user in order to set the coupling area's potential onto the user's potential. The coupling area need not be a closed area but may comprise a grid of conductive lines or an array of electrically connected structures. The coupling area is preferably electrically not exposed, i.e., covered or coated by a non-conductive material, and provides electrical contact to the exterior of the information carrier. The coupling area may comprise the same material as the conductive regions or a different material.

The coupling area can for example be used in such a way that the user places his/her finger on or close to this coupling area. Thus, the region(s) linked to this coupling area will have substantially the same electric potential as the user's finger. This may be advantageous, since touch screens are commonly designed to work with a typical capacity of a user. The coupling area need not necessarily be directly contacted by the user's finger, since the finger being in close proximity to the coupling area may sufficiently influence the capacity of the coupling area to achieve the desired effect. Preferably, the coupling area is of the same conductive material as the region(s) of conductive material and/or the conductive path(s). This may allow a simple and inexpensive production process.

It is preferred that the pattern encoding information imitates the properties of fingers with respect to a signal generated on a touch screen. In other words, the one or more regions brought into contact or at least close proximity with a touch screen generate a signal analogous to the one generated by one or more fingers touching a touch screen. In this context, the size, shape and/or capacitive properties are preferably chosen to be similar to those of finger tips.

By using the dielectric properties of the information carrier, the information stored or encrypted on the information carrier is no longer directly connected to the spatial shape. This has several advantages. The pattern does typically not affect the surface of the carrier which allows for a much more versatile use of the information carrier compared to the signets known from US 2010/0045627.

Advantageously, the coupling area comprises conductive lines, e.g. a grid, which preferably extend over substantially one side of the substrate. Thus, a user need not touch the information carrier at a specific location, but may touch the grid at any location in order to electrically connect himself/herself to the conductive regions. Alternatively, the user may bring his/her finger into close proximity of the coupling area to sufficiently affect the coupling area's capacity.

It is also preferred that the coupling area extends to at least one edge and/or corner of the information carrier. If the carrier is placed onto a touch screen it is most convenient to touch the carrier at its edge and/or corner. Thus, the coupling area extending to at least one edge and/or corner of the information carrier may ease the access thereto. An extension to an edge or corner does also encompass the situation, wherein only a small gap between the edge or corner and the coupling area is provided, the gap, e.g., being smaller than 5 mm, preferably smaller than 3 mm.

As the read out of the information stored on the information carrier is to be performed by a touch screen, it is preferred that the surface of said pattern is substantially flat. In the context of the present application, substantially flat corresponds to a generally 2-dimensional area with deviations at the transition between the substrate and the region of generally less than 200 $\mu$m, preferably less than 50 $\mu$m, more preferably less than 5 $\mu$m perpendicular to the surface. This, in general, depends on the method of application: While in the case of screen printing the applied print layer typically has a thickness of about 5 to 50 $\mu$m, layer thicknesses of less than 2 $\mu$m may be achieved by cold foil transfer methods. In the case of inkjet printing (e.g. a metal containing ink) the pattern may be as flat as the substrate (due to its natural roughness).

However, it may also be preferred that the pattern encoding the information is not formed as a top layer (i.e. the layer on the surface). It may also be preferred that the pattern is formed in all three spatial directions, e.g. by applying different layers with different two-dimensional "sub patterns" on top of each other. Also, the pattern may be covered by another non-conductive layer. There may also be one or more conductive layers behind the layer encoding the information as long as there is no electric contact between the additional conductive layers and the layer encoding the information.

Examples where the present invention can be used include (but are not limited to) access to restricted areas (both physical and virtual), usage of restricted data, usage of restricted hardware, franking, prepayment, postal charges, logistic of goods, applications in marketing and/or sale, customer loyalty, assurance against adulteration, copy rights, pay-back programs, device control, lotteries, applications for payment and the like.

Preferred materials for the second and third materials are: metals such as aluminum, lead, iron, gold, copper, magnesium, tungsten, zinc, tin, graphite, chrome, molybdenum; carbon black; dielectric materials; materials containing metals such as foils or films with a metal (e.g. aluminum) layer. Furthermore, salts and/or electrolytes may be used as second and/or third material.

An electrolyte in the sense of the present disclosure in particular denotes a chemical compound which is present in solution or as a melt dissociated into ions. Among these substances are acids, bases and salts. In water or water-like solvents, dissociation into ions is not always complete, so that, depending on the position of the dissociation equilibrium, a differentiation between weak electrolytes (which are not completely dissociated) and strong electrolytes (which are completely dissociated even in concentrated solution) can be made.

Among the electrolytes, the so-called ampholytes and polyelectrolytes take an exceptional position. Ampholytes in particular denote amphoteric electrolytic compounds which exhibit both acidic and basic hydrophilic groups and, thus, depending on the condition, show acidic or basic behaviour. Ampholytes comprise, for example, aliphatic polyamines with carboxy, sulfo or phosphono side chains. Polyelectrolytes in particular denote ionic polymers having a large number of ionically dissociable groups which may be an integral part of the main polymer chain or else may be pendant groups.

The electrolyte may either be a solid, liquid, gel-like or paste-like material and may be applied by means of suitable methods. Aqueous electrolytes may, for example, easily be applied to penetrable substrates such as paper, while in the case of non-penetrable substrates such as films it is recommended to gel the electrolyte.

A salt in the sense of the present disclosure in particular denotes a heteropolar compound, in the crystal lattice of which at least one type of cations other than hydrogen ions (protons) and at least one type of anions other than hydroxide ions can be found. Inorganic salts (metal salts) are formed of the elements or during the reaction of metals, metal oxides, metal hydroxides or metal carbonates with acids or anhydrides as well as during the reaction of metal salts with each other or by redox reaction of metal salts with elements. Inorganic salts include, for example, $2AlCl_3$, $FeCl_2$, $MgCl_2$, $AlBr_3$, $Ca(NO_3)_2$, $Na_2CO_3$, $CuCl_2$, or $NaBr$. Salt pairs which react by double decomposition to form two different salts in which the ions are interchanged as compared with the original salts are called reciprocal salt pairs, for example $NaCl$ and $KNO_3$.

Instead of metal ions, ammonium ions ($NH4^+$) or the analogous organic ammonium compounds comprising quaternary nitrogen atoms, carbocations, sulphonium, phosphonium, diazonium and other -onium compounds as well as organometallic complex cations such as ferrocenium may also be used.

Organic acid residues, such as residues of carboxylic acids, fatty acids and sulfonic acids, or phenolate residues may also act as anions in salts, thus forming metal soaps. To delimit them from the water-soluble sodium and potassium salts, the saturated and unsaturated natural and synthetic fatty acids, resin acids and naphthenic acids, the less water-soluble metal salts of these acids are called metal soaps. The most commonly used metal soaps are formulated as cations with lithium, aluminium, magnesium, calcium, manganese, iron, zirconium, cerium, zinc, cobalt and vanadium.

Preferably, the second and/or third material is applied onto the substrate by additive and/or subtractive methods, preferably by printing or laminating the second and/or third material onto the substrate. In additive methods, the second and/or third material is readily applied onto the substrate. This may happen in one or more steps of production. Additive methods include, but are not limited to, printing, laminating, transfer and coating methods, for example the methods described in WO 2010/043422.

In subtractive methods, the second and/or third material is added onto the substrate in excess. In one or more following steps, parts of the second and/or third material are removed (e.g. by laser procedures and/or cauterization). For both methods, printing the second and/or third material onto the substrate is an easy and economic procedure to achieve the desired pattern and thus preferred. Yet, other methods are also encompassed by the present invention. Preferably, the information carrier comprises layers of substrate and/or the second and/or third material.

The region(s) of the second material can also be embedded within the substrate or penetrating the substrate at least partially. Embedded in the context of this invention, and in particular in a generally two-dimensional structure refers to the following situation(s). First, it may refer to a substrate covering both sides (i.e. upper and lower side) of the second material when viewed from a direction parallel to the two-dimensional structure. Secondly, it may also refer to the substrate having recesses on the surface and the second material (at least partially) filling these recesses when viewed from a direction parallel to the two-dimensional structure. Thus, a pattern can be achieved which may not be visible to the naked eye. Furthermore, there can be at least one additional cover layer covering at least part of the substrate and/or at least part of said one or more regions. Preferably at least one of these cover layers comprises or consists of the first material. The cover layer may also be a cover board and it may comprise flexible and/or inflexible materials. The cover layer may serve as a protection of the pattern and/or may serve to make the pattern invisible to the naked eye.

Furthermore, it may also be advantageous to provide an information carrier with two or more coupling areas in which each of them is electrically connected to one or more subsets of the conductive regions, respectively, via conductive paths. By this, the user can choose one or more coupling areas. If, for instance, the user places his/her finger(s) on one of the coupling areas, only a certain subset of the regions will have the same electric potential as the user's finger(s). If the detection device is sufficiently sensitive, only this subset can be detected. Thus, the user can activate the detection of certain subsets and deactivate the detection of the remaining subsets. This can, for instance, be used to enable the user to make a yes/no decision.

In the generally two-dimensional shape of the information carrier, it may be preferred to place the coupling area(s) on the same side as the pattern with conductive materials. This allows a simple production process. Another option is to place the coupling area(s) on the side opposite to the conductive regions. This may be advantageous since the side with conductive regions is generally not easily accessible (since generally in contact with the touch screen) by the user when interaction with the touch screen is performed. In particular, it may be preferable to have the whole side opposite to the pattern as a coupling area. In this case, the user would not have to touch a designated area of this side, but simply any point on this side. This could allow an easier and more user-friendly operation. Yet another preferred option is to place the coupling area in such a way that it can be accessed from both sides. Furthermore, any combination of these options, for example, having one or more coupling areas on the same side as the conductive regions and one or more coupling areas on the opposite side is also envisaged.

Furthermore, the coupling area may be of different shapes, including, but not limited to, squares, circles, rectangles, ellipses, triangles and the like. It may be preferred to design the coupling area as a substantially fine grid of conductive paths. This may for example cover substantially the one, two or all surfaces of the information carrier, such that the whole information carrier could act as a coupling area. This would be advantageous, since the user would not have to touch a specially designated area, but simply any point on the surface of the information carrier. In particular, this would lead to an increased redundancy and in turn make the device less sensitive to erroneous conductive paths, which may arise - for example - in the process of production and/or during usage.

The present disclosure furthermore relates to a kit or system comprising a product and an information carrier, the information carrier being releasably connected or permanently fixed to the product or part of the product itself, e.g. by using the material of the product as a substrate for the information carrier. Releasable connections may include, but are not limited to, magnetic connection, hook-and-loop fasteners, techniques making use of vacuum, non-permanent adhesives, form-locked fixing, material-locked fixing and the like. Permanent fixation may include, but is not limited to, the two objects being glued to each other (with permanent glue), the information carrier being printed onto the product. The product mentioned above may be any object which one desires to connect to the information carrier. Examples for this include, but are not limited to, packages, dishes, printed products, clothes, furniture, documents, toys, consumer goods, food, semi-finished products, (parts of) machine(s), building materials, electrical goods and/or reusable materials (e.g. bottles).

The invention relates to a detection device having a touch screen, wherein the detection device is adapted to decode information upon interaction with an information carrier comprising a dielectric and/or conductive pattern which encodes the information, wherein the interaction is based on a difference in the dielectric coefficient and/or the conductivity of the pattern. It is preferred that the touch screen is adapted to detect the dielectric/conductive pattern. It is also preferred that the detection device is adapted to detect whether the information carrier interacts with the detection device. Further, it is preferred that decoding of information is at least partially performed by a computer program.

This is particularly advantageous over prior art technologies since the read out is performed by a touch screen. In contrast to the specialized detection devices, a touch screen is a detection device which is common in numerous electronic devices. This makes this technology more economic and versatile than the formerly known solutions.

In the context of the present invention, a dielectric pattern is a pattern defining areas or regions having different dielectric properties, in particular different dielectric coefficients. In the context of the present invention, a conductive pattern is a pattern defining areas or regions having different conductive properties, in particular different conductivities. The dielectric coefficient and/or conductivity may vary continuously over the pattern or in discrete steps. The pattern may comprise two distinct coefficients or a plurality of predefined dielectric coefficients/conductivities. That is, an object with a dielectric or conductive pattern is an object where the specific dielectric coefficient or conductivity depends from the position on the object. This may be achieved, for example, by providing an object comprising materials with different dielectric coefficients and/or conductivities. It may also be achieved by providing an object with a position dependent density.

Preferably, the information carrier comprises a substrate comprising a first material with a first dielectric coefficient $\varepsilon_1$, wherein the pattern is formed by said substrate and one or more regions of a second material with a second dielectric coefficient $\varepsilon_2$, the second coefficient $\varepsilon_2$ being different from the first coefficient $\varepsilon_1$. Other termini for the dielectric coefficient may include capacitivity, dielectric constant, dielectric permittivity, inductive capacity, permittivity and/or relative permittivity.

It is preferred to provide the information carrier in such a way that the first material, i.e. the material of the substrate, is non-conductive and the second material is conductive. This may also be inverted. Thus, the dielectric/conductive contrast is enhanced. Example electrically conductive materials include, without being limited to, metals, metal particles, materials comprising conductive particles, conductive polymers or any combination of the mentioned materials. It is preferred that the conductive particles comprise carbon black and/or graphite particles. Beyond these materials salts and electrolytes are also possible, as well as liquids, inks and fluids and/or combination of the mentioned materials. It is preferred that liquids, fluids and the like materials get gelled and/or cured, tempered or in any other way stabilized for further processing and/or handling. Stabilizing can also be reached by penetration of the fluids into a soaking surface.

In case the first and second materials are non-conductive and conductive, respectively, the information carrier may comprise any of the features discussed above with respect to the inventive information carrier, alone or in combination.

The present invention further provides a system comprising: an information carrier comprising a dielectric and/or conductive pattern which encodes information and a detection device having a touch screen; the detection device being adapted to decode the information upon interaction between the information carrier and the touch screen, wherein the interaction is based on a difference in the dielectric coefficient and/or conductivity of the pattern. The information carrier may have any of the features discussed above with respect to the inventive detection device and/or the inventive information carrier.

In the context of the present invention, a touch screen is an electronic visual display that can detect the presence and/or location of a touch by a human finger and/or a stylus. A touch screen is a generally two-dimensional sensing structure which can detect where it is touched. These touch screens are common in (but not limited to) smart phones, mobile phones, displays, tablet-PCs, tablet notebooks, graphic tablets, television devices, PDAs, and/or MP3 devices. Technologies to perform this detection include resistive, capacitive, acoustic wave and infrared technologies.

According to the invention, the interaction between the information carrier and the touch screen can be one of the above-mentioned interactions. However, a capacitive interaction is generally preferred. In this case, touch screens (and/or the detection devices of the touch screens) is preferably one with the projected-capacitive-touch technology (PCT). Alternatives of the PCT-technologies comprise "mutual capacitance" and "self capacitance". They can be embodied as "mutual capacitance screens" and as "self capacitance screens", respectively. One of the reasons for this may be the fact that the capacitive interaction is particularly sensitive to the dielectric pattern. Preferably, the touch screen is adapted to detect the dielectric/conductive pattern (of the information carrier), i.e. it has a sensitivity which is sufficient to detect the difference in the dielectric coefficient/conductivity of the pattern. For this purpose, the pattern could be designed such as to allow its detection by the detection device. Vice versa the spatial resolution of the detection device and its resolution in term of measuring a change in capacity could be adapted to the type of the pattern.

This system may comprise detection devices with different properties. This may include that one has to switch into a mode (and/or start a corresponding program) to bring the detection device into the mode where it can detect the information on the information carrier. However, preferably the detection device is adapted to detect whether the information carrier interacts with the detection device. This may be achieved by including a certain threshold signal strength, in particular a threshold for the contrast in the received signal, beyond which actions are performed. It is preferred that the detection device can also operate when there is an interaction between the detection device and two or more information carriers. This may allow the system to perform more complex operations. One example how this can be used is by accessing a restricted area only when two information carriers are presented to the system at the same time (e.g. a laboratory which may not be entered by a single person for security reasons).

The present invention further provides a method comprising the following steps: providing one or more information carriers with a dielectric and/or conductive pattern and a detection device having a touch screen and inducing an interaction between the information carrier and the touch screen, wherein the interaction is based on a difference in the dielectric coefficient and/or conductivity of the pattern.

Therein, the information carrier may have any of the properties as described above in the context of the detection device, the system and/or the information carrier. Preferably, inducing an interaction generates a touch signal. A touch signal in the context of this patent is a signal in a system with a touch screen that is analogous or at least similar to a signal generated in the system when the touch screen is touched by one or more fingers of a user. In other words, the pattern of the information carrier is designed to generate a signal on a touch screen which imitates a "typical" finger touch. Accordingly, size and shape of the structures forming the pattern may be chosen accordingly as well as their arrangement. Furthermore, the materials used by the pattern may be chosen accordingly.

Alternatively, the touch screen may be adapted by appropriate software and/or hardware changes that it recognized the pattern of the information carrier even though the pattern does not simulate a "typical" finger touch. Rather, the touch screen recognized a minimum difference in capacity and/or dielectric coefficient in between the first and second materials so as to be able to decode the encoded information.

Preferably, this touch signal is a capacitive one. This may correspond to a capacitive interaction between the information carrier and the touch screen. It may also be preferred that this procedure (or method) comprises a further step of decoding information encoded by the dielectric and/or conductive pattern by means of the detection device. This would then allow this method to read out information formerly not known by the detection device. The method may also comprise a further step of inducing events in the system. Examples include, but are not limited to, logging onto the system, getting access to certain (restricted) areas (of the system and/or to the internet), starting a program, doing a payment and/or verification, upload and/or download content, play a game, control and/or manipulate programs, alteration of numerical values and/or part(s) of text, manipulation of graphics, alteration of data and the like.

Inducing the interaction between the information carrier and the touch screen may be achieved in different ways. One preferred way to achieve this is to bring the information carrier and the touch screen into at least partial direct contact. In the context of the present invention, this means that the touch screen and the information carrier touch each other (at least partially). One preferred way to do this is by placing at least a part of the information carrier on at least part of the touch screen. This may for example be done by holding the information carrier onto the touch screen or by laying the information carrier on top of the touch screen, or vice versa. Holding can either be performed manually by the user or by a device adapted to hold the information carrier in position. However, the partial contact is not limited to a static one.

Another possibility to bring the information and the touch screen into contact is to induce a motion between the information carrier and the touch screen. This can for example be achieved by swiping at least part of the information carrier across at least part of the touch screen. This may be advantageous if the touch screen is part of a relatively large device which cannot be moved easily (e.g. the display of an ATM machine) and/or the information carrier is small and can therefore be easily handled. Another possibility is to swipe at least part of the touch screen across at least part of the information carrier. This may be preferred in case the touch screen is part of a small device (e.g. a smart phone) that can easily be handled and/or the information carrier is either large in itself or connected in such a way that it cannot be handled easily (e.g. fixed to a heavy item). Furthermore, swiping the detection device comprising the touch screen across the information carrier may also be advantageous (in fact, sometimes even necessary) if the (generally two-dimensional) size of the information carrier is larger than the area of the touch screen.

In the context of relative motion between the information carrier and the touch screen, it is also preferred that the properties of the motion encode information which may lead to events, optionally different events. The properties of the motion include, but are not limited to, direction of the motion, speed of the motion and the like. An example may be that a user can log onto a computer system (or start a program) by swiping his/her information carrier into one direction. Swiping the information carrier into the other direction may lead to log out (or the program being terminated).

However, for the interaction to be sufficiently strong, it may not even be necessary to bring the information carrier and the touch screen into direct contact, i.e. to make these two devices touch each other. For this reason, inducing the interaction may also be achieved by bringing the information carrier into proximity of the touch screen, preferably within 2 cm of the touch screen. A rather small range of interaction is advantageous in terms of security over, e.g., RFID technology, since sensitive information cannot be read out over large distances.

Again, it is preferred that this method can be applied to both using a single information carrier and using two or more information carriers at the same time. It may also be preferred that the two or more information carriers are not presented to the detection device at the same time, but at least partially shifted in time. This may be advantageous as it allows more complex operations or as a feature within the concrete application of the information carrier.

It may also be preferred that the information carrier corresponds to a stored data set in a data processing system. This data set may be either static or dynamic.

It may also be preferred that the information carrier corresponds to a certain event in the data processing system. This means that the information carrier could be used to induce this event.

According to the present invention, one can use any suitable pattern detectable by a touch screen to encode information on an information carrier. That is, one is not limited to make use of the dielectric and/or conductive pattern (though this one has certain advantages as described above). Generally, any method with the following steps is suitable to read out information readable by a touch screen: providing an information carrier with a pattern that encodes information and a detection device having a touch screen; inducing an interaction between the information carrier and the touch screen; detecting a signal corresponding to the pattern with the detection device and decoding the signal to retrieve the encoded information. One preferred option is that the signal decoding is performed by the detection device. Any pattern detectable by the detection device having a touch screen can be used. Examples include, but are not limited to, the dielectric and/or conductive pattern as described and a pattern formed by spatial deviations of an information carrier.

Preferably, the pattern comprises a pixel or dot structure that is an array or a matrix of predetermined areas which may be set onto a specific value, e.g. logic low and/or logic high. Again, this pixel structure can be formed by any physical properties detectable by the detection device having a touch screen. Examples include, but are not limited to, spatial properties (i.e. recesses and protrusions), electric properties of materials (including differences in the electric potential, dielectric coefficients, electric conductivity, electric charges, and electrical currents), differences in temperature, color, density, pressure, etc. Preferably, the pixels in the pixel structure correspond to logic high and logic low. For example, a dielectric pattern may comprise certain pixels (that is regions in space which are sufficiently large to be distinguished by the detection device) with two materials, differing in their dielectric coefficient, $\varepsilon_1$ and $\varepsilon_2$, respectively. The pixels with $\varepsilon_1$ may correspond to logic high and the pixels with $\varepsilon_2$ may correspond to logic low (or vice versa). Similarly, the pixel structure may be formed by spatial shapes, for example by pixels sticking out (for logic high) and other pixels being recessed (logic low), or vice versa.

Furthermore, it is also possible that the pixels do not only represent two different "states", but a plurality of states. To provide an example, it may for instance be preferred that the dielectric and/or conductive pattern comprises more than two materials with different dielectric coefficients and/or conductivities, each dielectric coefficient/conductivity corresponding to a different state. Similarly, to provide one example for the case of spatial patterns, one may not only have protrusions and recesses to encode information, but one may simultaneously use different shapes encode further information. It is also possible that the dielectric pattern comprises only one pattern material but in some areas of the pattern the amount of material is higher or vice versa lower than in other areas of the dielectric and/or conductive pattern. This may be advantageous for security or counterfeit purposes. By combining different dielectric materials and their amount a higher plurality of states will result. Thus, the same 2-dimensional pattern layouts can cause different events.

Also, having more than two possible states on a pixel may lead to a higher complexity and/or to the possibility to encode more information on a single pixel and in turn on the information carrier as a whole.

The information as stored in a pixel does not necessarily have to correspond to discrete states. It may even be preferred to have a continuous manifold of a certain property. One example may be that the height (or other dimension) of the protrusions and recesses is not limited to certain values, but can in fact be any value (within a certain limit). Again, this would lead to a possibility to store more information on a single information carrier.

The use of the method of the present invention enables decoding any information that is saved on such an information carrier. Preferably, an adapted algorithm decodes the signal. This could, for instance, allow decoding information prior not known (and/or recognized) by the system. In other words, according to the present invention not only pre-defined shapes or patterns which are stored in a data base can be recognized, but the information encoded on the information carrier can be retrieved by applying a specific algorithm to the detected signal. Rather than comparing a detected shape with a stored shape the inventive method allows to calculate the decoded information by means of said algorithm without the need for stored matrices or mapping tables.

It is also preferred to have a detection device having a touch screen, wherein the detection device is adapted to decode information encoded within a pattern of an information carrier upon interaction of said information carrier with the touch screen by means of a decoding algorithm. In particular, it is preferred to use a computer program for this task.

Again, the inventive method is not limited to the use of only one information carrier. One may use one or more information carriers. This could, for example, allow for more complex operations.

While not specifically claimed in the present application, the following aspects refer to preferred embodiments of novel and unique information carriers:

1. An information carrier comprising
a substrate comprising a first, non-conductive material;
one or more conductive regions comprising a second, conductive material, wherein the substrate and the one ore more regions form a pattern encoding information; and
a coupling area of a third, conductive material, wherein at least one of the conductive regions is electrically connected to the coupling area via at least one conductive path.

2. An information carrier according to aspect 1, wherein the coupling area comprises a grid of conductive lines.

3. An information carrier according to any of aspects 1 to 2, wherein the coupling area extends to at least one edge and/or corner of the information carrier.

4. An information carrier according to any of aspects 1 to 3, wherein the coupling area and the conductive regions are arranged on opposite sides of the substrate.

5. An information carrier according to any of aspects 1 to 4, comprising at least two conductive regions, the conductive regions being electrically connected to each other via at least one conductive path.

6. An information carrier according to any of aspects 1 to 5, comprising two or more coupling areas and two or more conductive regions, wherein each of these coupling areas is electrically connected to a subset of the conductive regions, respectively, via conductive paths.

7. An information carrier according to any of aspects 1 to 6, wherein the dimensions of the conductive paths in a cross direction are smaller than the diameter of the regions.

8. An information carrier according to any of aspects 1 to 7, wherein the surface of said pattern is substantially flat.

9. An information carrier according to any of aspects 1 to 8, wherein the second and/or third material is applied onto the substrate by additive methods, preferably by printing or laminating the second and/or third material onto the substrate.

10. An information carrier according to any of aspects 1 to 9, wherein the second and/or third material is applied onto the substrate by additive methods and wherein the second and/or third material is at least partially removed by subtractive methods, preferably laser ablation, etching or mechanical abrasion.

11. An information carrier according to any of aspects 1 to 10, wherein said one or more regions and/or said coupling area are arranged on top of the substrate.

12. An information carrier according to any of aspects 1 to 11, wherein said one or more regions are embedded within the substrate.

13. An information carrier according to any of aspects 1 to 12, further comprising at least one cover layer covering at least part of the substrate and/or at least part of said one or more regions.

14. An information carrier according to aspect 13, wherein said at least one cover layer does not cover the coupling area.

15. An information carrier according to aspect 13 or 14, wherein said at least one cover layer comprises or consists of the first material.

16. An information carrier according to any of aspects 1 to 15, wherein the pattern is at least partially invisible to the naked eye.

17. A kit comprising a product and an information carrier according to any of aspects 1 to 16, the information carrier being releasably connected or permanently fixed to the product.

18. A method with the following steps:

providing an information carrier with a pattern that encodes information and a detection device having a touch screen; inducing an interaction between the information carrier and the touch screen; detecting a signal corresponding to the pattern with the detection device; and decoding the signal to retrieve the encoded information.

19. A method according to aspect 18, wherein the pattern comprises a pixel structure, wherein the pixels in the pixel structure preferably correspond to logic high and/or logic low.

20. A method according to any of the aspects 18 to 19, wherein the signal is decoded by the detection device, wherein the signal decoding is preferably performed by an adapted algorithm.

The basic idea of the present invention is not limited to touch screens. Other capacitive devices whose mode of detection is based on capacitive interaction may be utilized as well. In particular, other touch devices such as touch pads or track pads may be used for the present invention. For example, information encoded on an information carrier may be transferred to a laptop by placing the information carrier on the touch pad or track pad of the laptop, which identifies the pattern via capacitive interaction. Accordingly, the detection device according to claim 1 may comprise another touch device rather than a touch screen and the method according to claim 14 may utilize another touch device rather than a touch screen, preferably a touch pad or track pad.

The present invention is further directed to a computer program comprising program code means for performing the following steps when said program is run on a detection device having touch screen: decoding a signal detected by the touch device/touch screen of the detection device to retrieve data representing information encoded in the signal; and inducing an event in the detection device based on the retrieved data.

The present invention is described by way of examples in more detail below referring to the following Figures:

Figs. 1 to 4, 5a    and 6 are top views of information carriers which may be used in the methods according to the present invention.

Fig. 5b          shows a cross section of the information carrier shown in Fig. 5a.

Figs. 7 to 12    are top views of information carriers which may be used in the methods in accordance with the present invention.

Fig. 13a         is a top view of an information carrier which may be used in the methods according to the present invention.

Fig. 13b         is a cross section of the information carrier presented in Fig. 13a.

Figs. 14 and 15  show preferred embodiments of a kit that may be used according to the invention.

Figs. 16 to 20   show preferred methods to induce an interaction between one or more information carriers according to the present invention and a detection device comprising a touch screen, wherein the information carriers have a fixed position with respect to the detection device.

Figs. 21a to 21c show a preferred method to induce an interaction between an information carrier according to the presented invention and a detection device comprising a touch screen, wherein the detection device is swiped across the information carrier.

Figs. 22-26      show flow charts of methods of use according to the present invention.

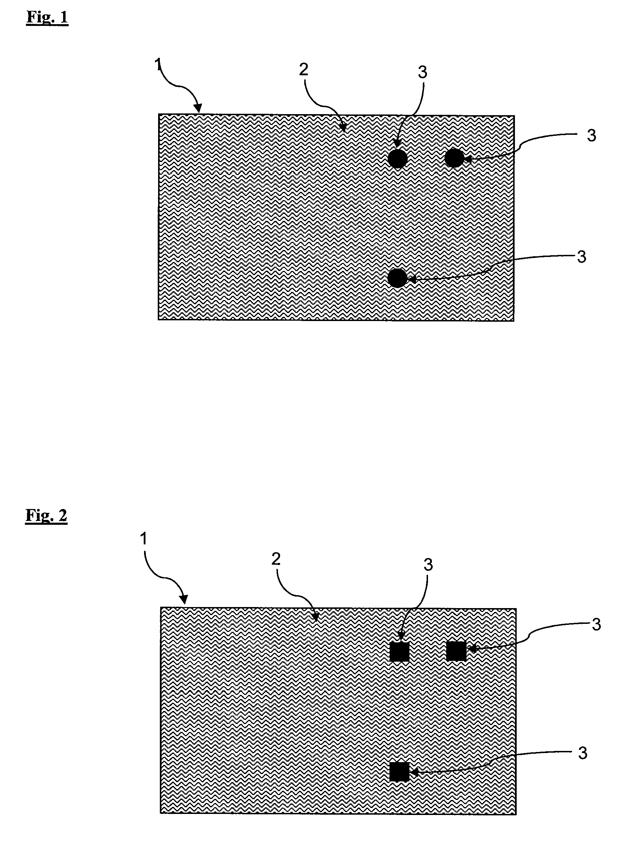

Fig. 1 is a top view of an information carrier 1 comprising a substrate 2 of a first material with the dielectric coefficient $\varepsilon_1$ and a dielectric pattern formed by regions 3 of a second material with the dielectric coefficient $\varepsilon_2$ and the substrate 2. In other words, the dielectric pattern comprises most of the surface of the substrate 2, on the one hand, and the regions 3, on the other hand. The substrate 2 preferably comprises a non-conducting material such as plastics, synthetic materials, paper, carton, (derived) timber products, composite materials, ceramics, glass, cloths, textiles, leather or any combination of the mentioned materials. The regions 3 preferably comprise a conducting material such as metals, metal particles, materials comprising conductive particles, conductive polymers, carbon black and/or graphite, salts, electrolytes or any combination of the mentioned materials.

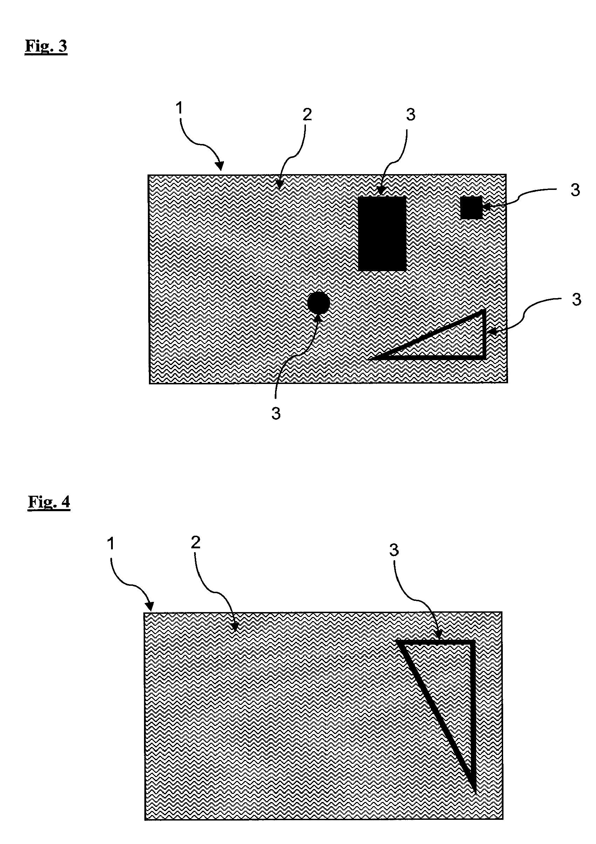

The regions 3 forming the pattern together with the substrate 2 may be of different shapes and/or sizes, possible shapes including (but not limited to) circles (Fig. 1) and squares (Fig. 2). Yet, any other shape not represented within the Figures may be used. A single information carrier may comprise a pattern with regions 3 of different shapes and/or sizes, the shapes including circles, rectangles, squares, triangles (Fig. 3 and 4) and/or other shapes. It is preferred that the regions 3 are separated by a predetermined distance, at least 20 $\mu$m, preferably at least 1 mm. Thus, the different regions 3 may me distinguished by a touch screen as separate regions.

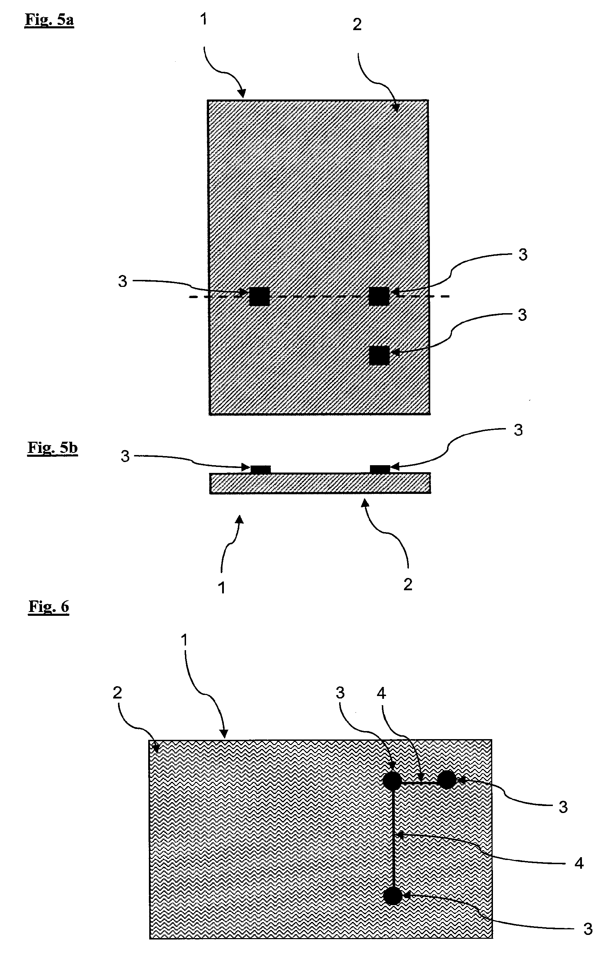

Preferably, the regions 3 forming the pattern are arranged or applied on top of the substrate 2 as can be seen in Fig. 5b, which is a cross section through the top view of Fig. 5a along the dashed line. Yet, the pattern may also be applied to the bottom of the substrate 2. The substrate 2 may also be provided with a pattern of recesses, the recesses being filled with the second material. Thus, a completely flat surface of the pattern may be achieved even in case of the regions having a thickness disturbing the impression of a smooth surface. It is generally preferred that the pattern formed by the substrate 2 and the regions 3 is substantially flat.

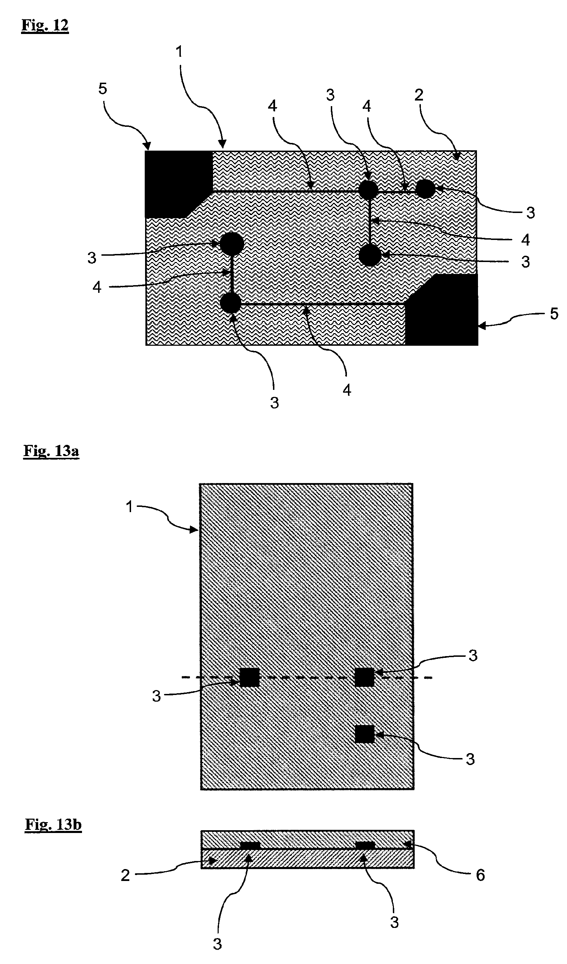

A substantially flat surface may be achieved by printing or laminating the regions 3 onto the substrate 2. Even though the printed or laminated regions 3 will have a certain thickness, the surface will nevertheless be considered as substantially flat by a user due to the impression of a smooth surface. In order to achieve a substantially flat surface the regions 3 may also be embedded within the substrate 2 (cf. Fig. 13b) and/or the top of the information carrier 1 may be covered or coated at least partially with a layer of additional material, as described below with respect to Fig. 13b.

Fig. 6 shows a top view of an information carrier 1. In case the substrate 2 is formed by a non-conducting material and the regions 3 are of conductive material, it is preferred to connect (at least) some of the regions 3 via conductive paths 4. Their cross section (parallel to the surface of the information carrier 1) of these paths 4 may be smaller than the diameter of the regions 3 as shown in Fig. 6. However, their cross section may also be of an equal or even larger size than the diameter of the regions 3 as shown in Fig. 4. Due to the conductive paths 4 the regions 3 are on the same electric potential, which may be advantageous to provide a constant well-defined signal by each region 3. In case of Fig. 6 the signal may only be generated by the regions 3 as such, while in case of Fig. 4 the conductive paths may also generate a detectable signal on a touch screen.

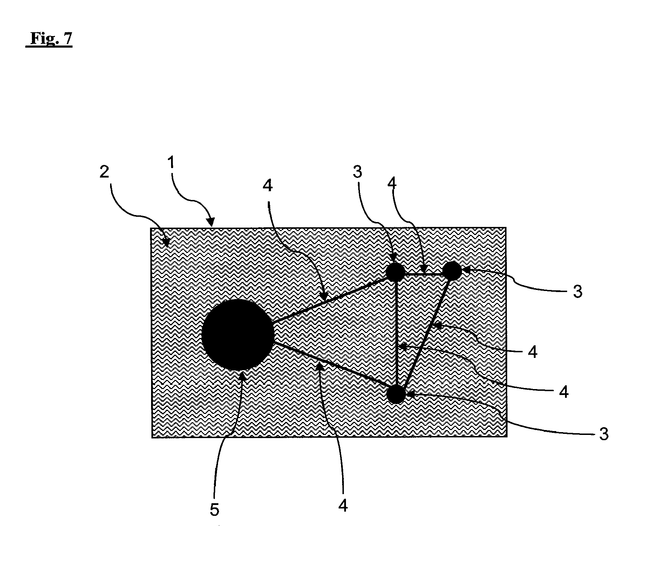

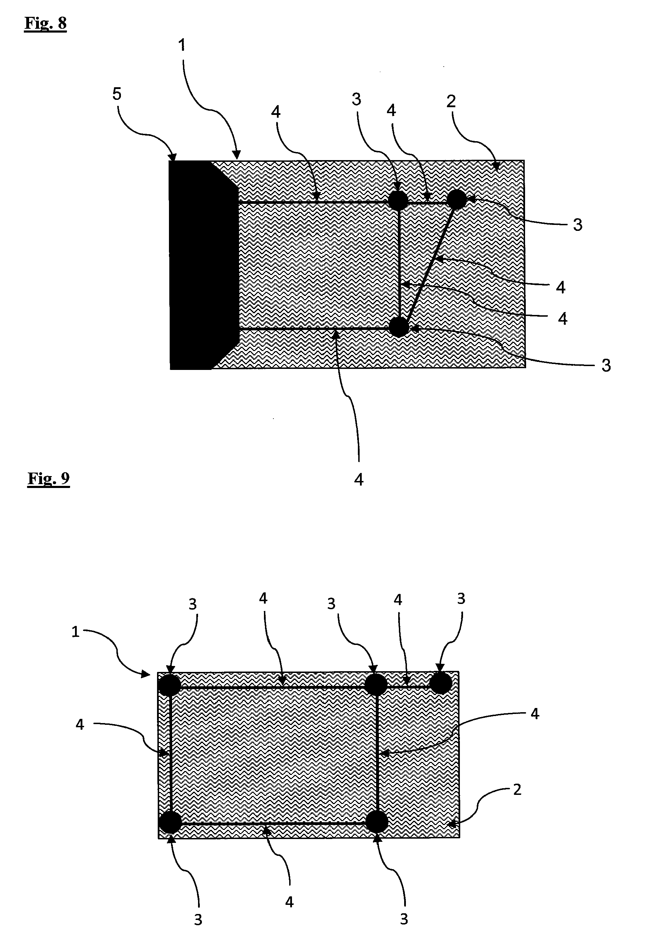

It is preferred to connect at least one of the regions 3 to a coupling area 5 via conductive paths 4, as shown in the embodiment of Fig. 7. Touching the coupling area 5 with a finger will set the regions 3 electrically connected to the coupling area 5 on the same electric potential as the user. Furthermore, the capacity measured by the touch screen will more closely resemble the typical capacitive change induced by a finger touching the touch screen. When viewed from the top, the position of this coupling area may include to be located remote from the edges of the substrate 2 (as shown in the embodiment of Fig. 7), as well as on one side edge of the of the information carrier 1 (as shown in the embodiment of Fig. 8). However, other positions (e.g. in one corner) are also possible.

It is in particular preferred to provide a coupling area 5 surrounding substantially the entire carrier 1 to provide possible touch locations to a user around the entire edge of the carrier. The coupling area 5 may be provided on the same side of the carrier as the regions 3 as shown in the embodiments of Figs. 7 and 8. Alternatively, it may be provided on the opposite side (not shown). Thus, a user may touch the coupling area on the back side even if the front side completely contacts the touch screen.

Furthermore, it is possible that the coupling area 5 coincidences with one or more of the regions 3 of conductive material and/or with one or more of the conductive paths 4. For example, in Fig. 9 the coupling area 5 may coincidence in fact with all regions 3 of conductive material. Alternatively, the coupling area 5 may coincidence with all conductive paths 4.

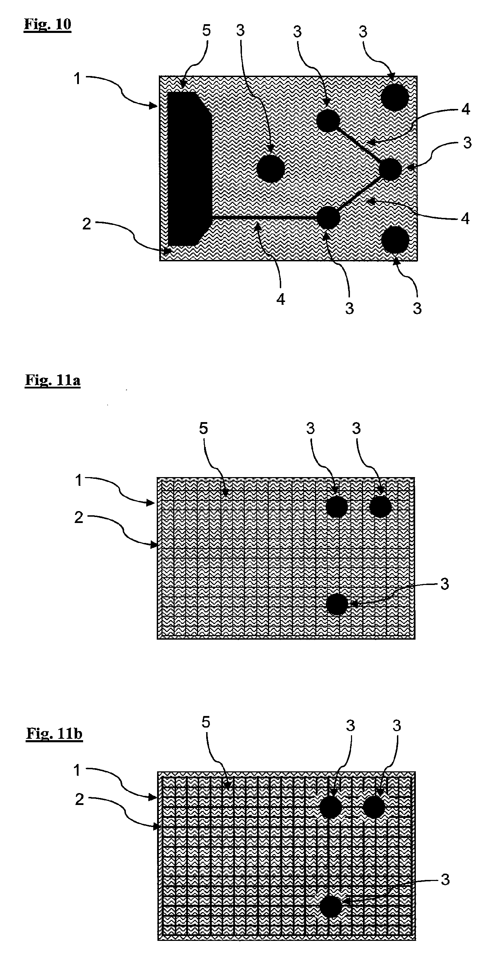

The coupling area 5 may be electrically connected to all regions 3 as shown in the embodiments of Figs. 7 to 9. Alternatively, only one ore more of the regions 3 are electrically connected to the coupling area 5, while one or more of the regions 3 are electrically insulated from the coupling area 5 as shown in the embodiment of Fig. 10.

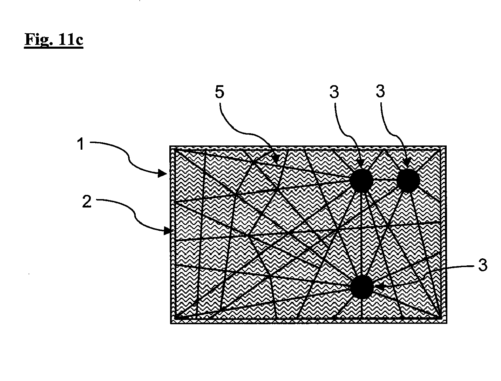

It is also preferred to provide a grid of conducting lines covering a part or all of one, both or all surfaces of the substrate. Examples of such grids are shown in Figs. 11a to 11c. The grid may consist of a regular pattern of electrically conducting lines as shown in the embodiment of Figs. 11a and 11b or of an irregular arrangement of electrically conducting lines as shown in the embodiment of Fig. 11c. Other grids or line patterns as the ones shown may be utilized as well. The grid does not necessarily have to cover the entire surface of the information carrier but may also be provided in one ore more regions, only. The grid acts as the coupling area since a user may touch the surface of the carrier at any portion which does comprise the grid. It is in particular preferred to substantially extend the grid to the outer perimeter of the substrate 2, e.g. by a surrounding conductive line as shown in Figs. 11a to 11c. This will ensure the coupling effect at any stage of usage of the information carrier.

The conductive regions 3 may be directly connected to all conductive lines of the grid which cross or traverse the regions 3 as indicated in Fig. 11a. However, this sometimes causes perturbations to the signals being detected and/or leads to noise in the signal. It is thus preferred that the conductive regions 3 are electrically connected to the grid only via some or even only one of the conducting lines crossing or traversing the regions.

For example, in the embodiment shown in Fig. 11b each conductive region 3 is directly connected to two conductive lines which cross the regions only, whereas the remaining lines are interrupted proximate the conductive regions 3. This embodiment is surprisingly less susceptible to faults.

In certain embodiments, two or more coupling areas 5 are provided which are connected via electric paths 4 to two or more subsets of regions 3 of conductive material, as is shown in the embodiment of Fig. 12, in which a first subset comprises three regions 3 and a second subset comprises 2 regions 3 electrically connected to one coupling area 5, respectively. Thus, the user may decide which subset of regions 3 is to be set on the user's potential by touching one of the two coupling areas 5 only. If the touch screen is sensitive to regions 3 only, which are electrically connected via a coupling area to a user, the touch screen will detect the three regions 3 of the first subset or the two regions 3 of the second subset depending on the user's touch location. Accordingly, the type of detectable information encoded on the information carrier may be influenced by the user choosing a coupling area 5.

The information carrier may also comprise more than two coupling areas with corresponding subsets of regions 3. For example, a coupling area 5 may be provided at each corner and/or each edge and/or each side of the information carrier. The different coupling areas may be color coded or otherwise identified to the user as generating a particular signal (corresponding to the particular subset of the pattern).

Preferably, a coating or covering layer 6 is arranged on top of (at least part of) the substrate 2 and on top of (at least part of) the regions 3. This can be seen in Fig. 13b, which is a section across the top view of Fig. 13a along the dashed line. The material of the coating/covering layer 6 may be the same or different from the first material and may have specific properties such as providing a certain optical impression, making the carrier durable, protecting the regions 3 from any impact such as force, humidity or the like. The purpose of the coating layer 6 may also be to provide a perfectly flat surface improving the haptic impression to a user and/or to cover the pattern with an opaque or non-transparent layer to render the pattern invisible to the naked eye. Alternatively, the coating layer 6 may be made of or comprise the first material, the regions 3 thus being embedded within the first material. Preferably, the regions 3 are arranged symmetrically with respect to the cross direction providing a pattern which may be detected from both sides of the carrier.

According to an embodiment of the invention, the embedded regions 3 shown in Fig. 13b are combined with regions 3 on top of the substrate as shown in Fig. 5b. In other words, the pattern formed by the regions and the substrate don't need to be arranged within one two-dimensional area but may also have a component in the third dimension. Preferably, the touch screen is adapted to distinguish between embedded regions and regions applied on top due to their different signal strength.

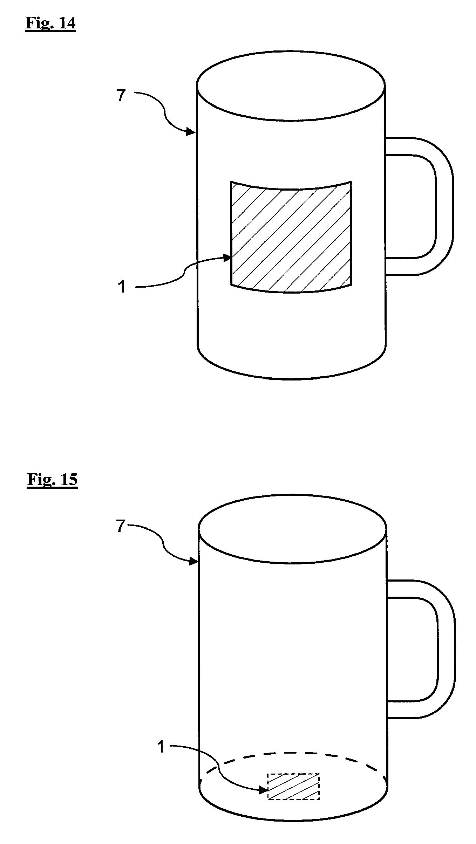

It is preferred that the information carrier is releasably connected or permanently fixed to another object, e.g. to a cup 7 shown in the embodiments of Fig. 14 and 15.

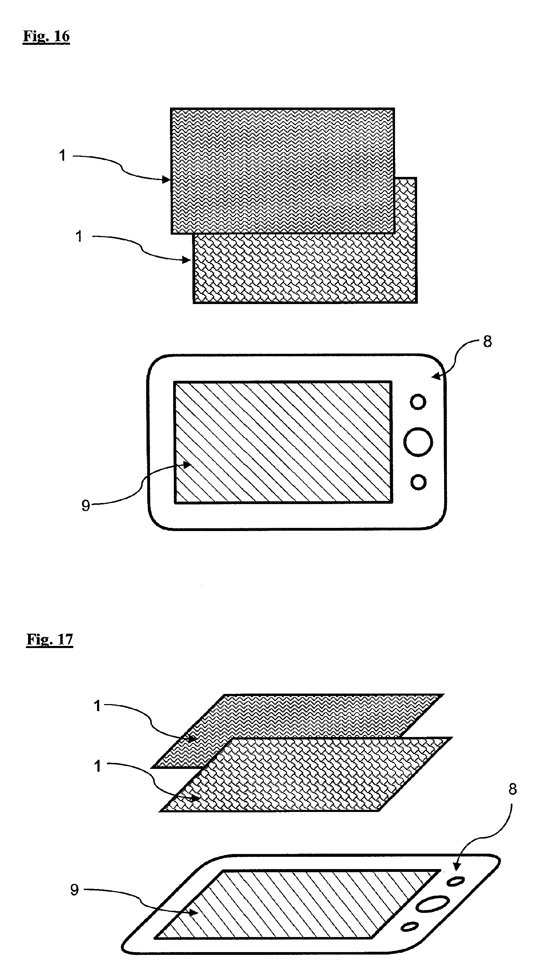

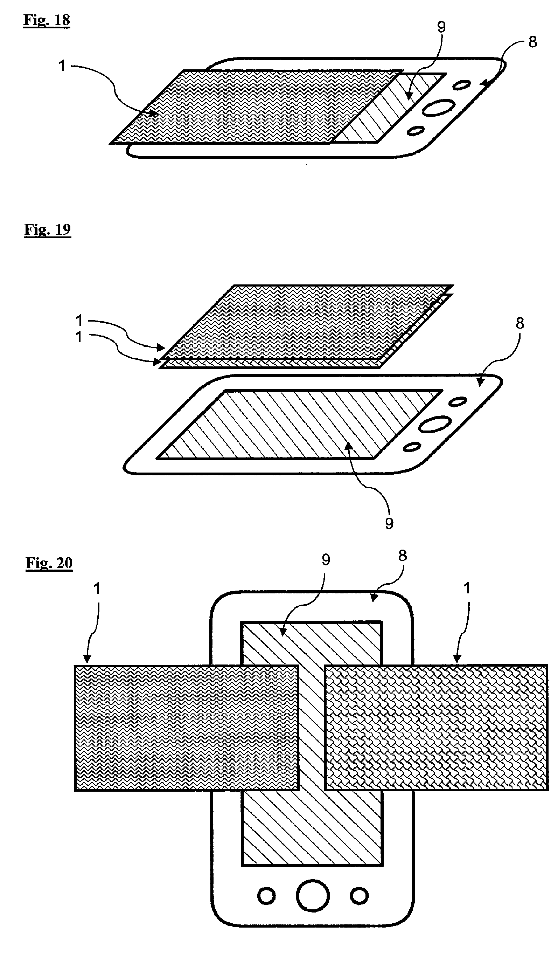

Fig. 16-20 show interactions between two information carriers 1 and a detection device 8 comprising a touch screen 9, wherein Fig. 17 is a perspective view and Fig. 16 is a top view. One preferred method to perform this interaction is to place at least part of the information carrier 1 on at least part of the touch screen 9, as seen in Fig. 18. It may be necessary to place essentially the complete information carrier onto the touch screen 9 to generate the appropriate signal. Yet, it is preferred that it suffices to place only part of the information carrier onto the touch screen. Thus, a portion of the information carrier remains free which allows a user to, e.g., easily touch one or more coupling areas. The signal generated in the touch screen may depend on the orientation of the carrier with respect to the touch screen. Yet, it is preferred that the signal does not depend on the orientation. For this purpose, the pattern may comprise a predetermined sub-pattern which is used to identify the orientation of the carrier with respect to the touch screen.

Another preferred method is to bring one or more of the information carriers 1 into proximity of the touch screen 9, as shown in Fig. 19.

One can also (at least partially) place two or more information carriers 1 onto different parts of the touch screen 9 of the detection device 8. This is shown in Fig. 20. This allows for more complex operations such as generating signals defined by a specific combination of carriers. Preferably, the portion of the information carrier to be put into contact with the touch screen is marked on the carrier to ease its use. Preferably, the one or more coupling areas are provided in portions which are not to be put into contact.

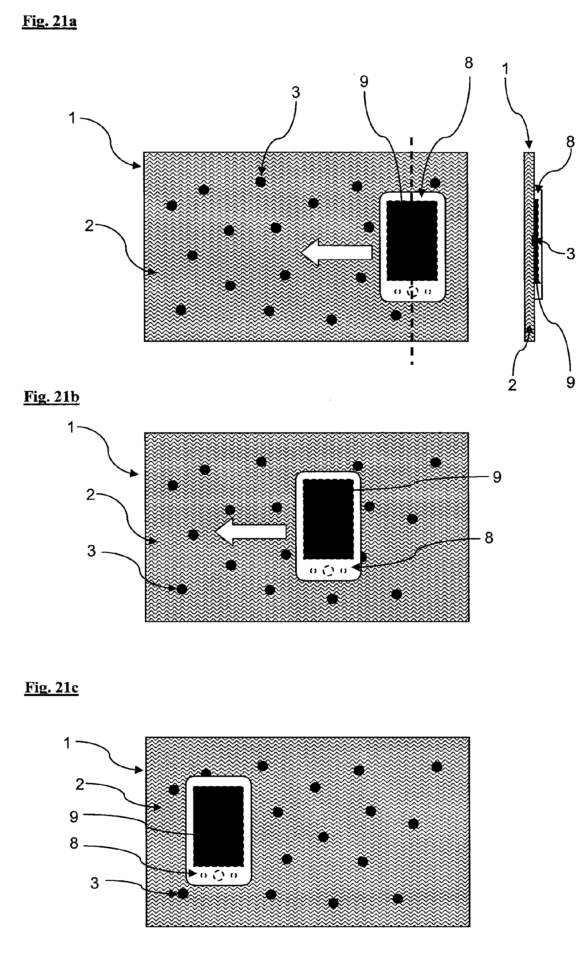

It is also preferred that the interaction between the touch screen 9 of the detection device 8 and one or more information carrier(s) 1 may be induced a dynamic interaction rather than a static one. For example, inducing the interaction may comprise moving the information carrier with respect to the touch screen or vice versa. For example, swiping the detection device 8 across the information carrier 1 may induce an interaction. This can be seen in Fig. 21a-c which is a top view of a series (in time) of this swiping process. The block array indicates the direction of the movement of the detection device 8. On the right side in Fig. 21a, a section across the top view is also included. The direction of movement may be marked on the information carrier for the user's convenience. Movement in different directions may also cause different signals to be detected by the touch screen. Movement includes also rotation or up and down motions.

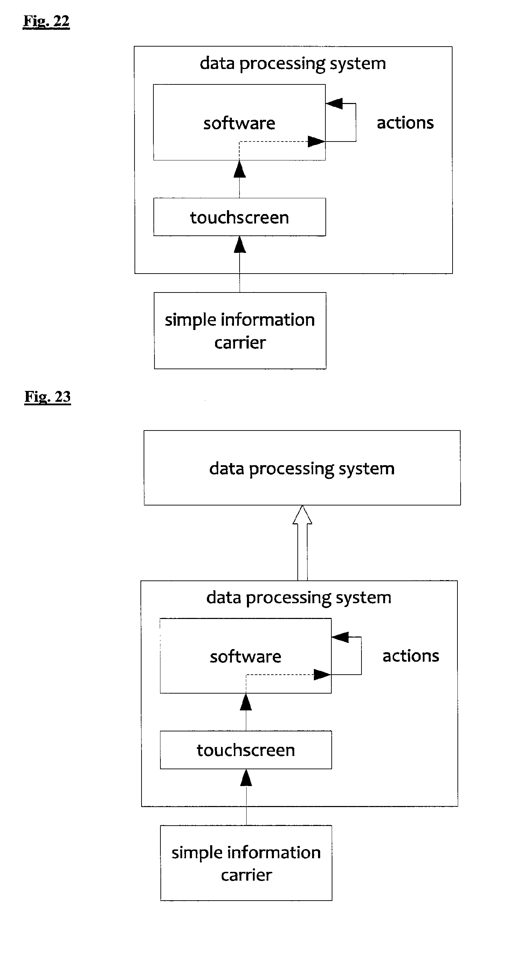

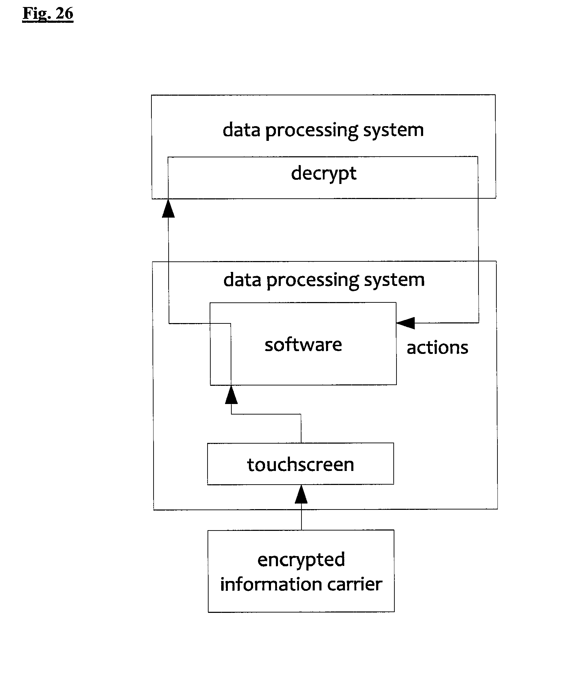

Figs. 22-26 show flow charts of methods of use according to the present invention. The information carrier which comes into close proximity and/or directly contacts the touch screen interacts with the touch screen. Due to this interaction a specified event and/or action is induced. Such event or action may comprise starting and/or interrupting and/or terminating an application or the like; amending of numerical values, written text, data or the like; manipulating graphics; acquiring access to a provider of information technology or the like.

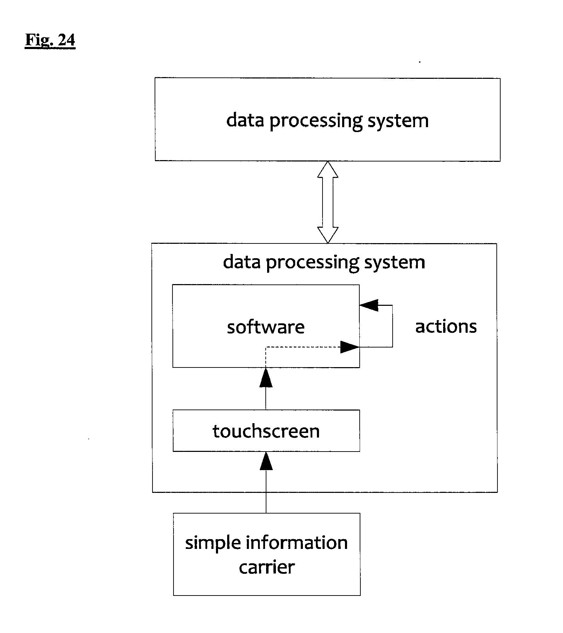

The action may take place within the data processing system and in relation to the software of the data processing system itself (cf. Fig. 22). Alternatively or in addition, an action on or with respect to a second, external data processing system may be induced (cf. Fig. 23 and 24), wherein the interaction between the two data processing systems may be uni-directional (Fig. 23) or bi-directional (Fig. 24). In other words, the induced action may only affect the external system without response or the external system may, in response to the action, affect the internal data processing system and/or its software and/or the program running thereon.

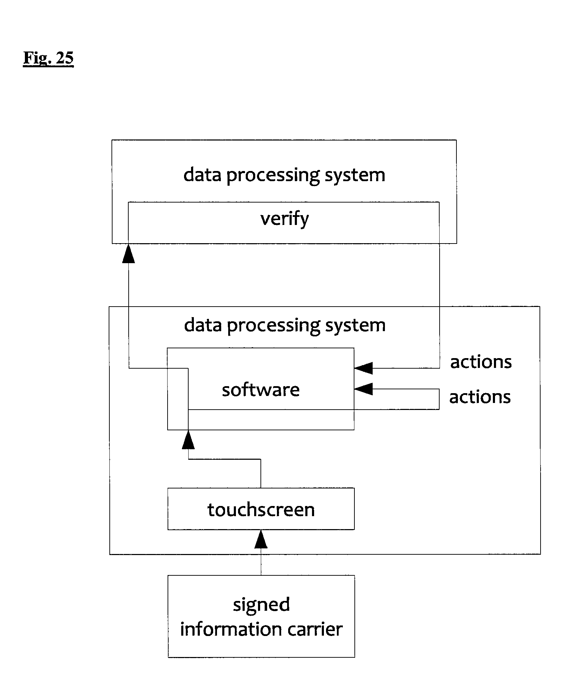

As shown in Fig. 25 the information carrier may also comprise information related to an electronic signature (on a signed information carrier), wherein preferably an interaction occurs between the device as such, an external data processing system and a data network such as internet or Ethernet. Thus, the electronic signature of the information carrier may be verified via internet. If verification is positive access to the device or data processing system may be granted.

As mentioned above, the regions may have any shape or size as long as a typical touch screen or a specifically designed or programmed touch screen is capable of detecting these regions. In particular, the regions may have to be of a particular minimum size. It is preferred that the surface area of the regions is at least 1 $mm^2$, preferably at least 28 $mm^2$.

In order to roughly calculate the amount of data which may be saved or encoded on the information carrier, one may assume that the regions may, for example, be circles having a diameter of 8 mm. 54 such regions may be arranged on a touch screen having a width of 50 mm and a height of 75 mm in a 6 x 9 pattern. Since regions having a distance of one radius may still be resolved in position, the total number of possible positions is doubled, taking edge effects into account: (6*2-1) x (9*2-1) = 11 x 17 = 187 possible positions, which may be distinguished. Since adjacent positions cannot be resolved if they both comprise a region, a set position blocks its eight neighboring positions in the worst case (not taking edge effects into account). Accordingly, if five regions are set 5 x 8 = 40 positions are blocked. Thus, 147 positions remain free. According to the binomial coefficient there are $\binom{147}{5}$ possible arrangements, i.e. 534'017'484 possible arrangements based on this rough estimate. This number may be depicted as a binary number having 29 digits ($2^{29}$ = 536'870'912 > 534'017'484). Thus, 29 Bit of data may be represented in this example.

**Claims**

1. A detection device having a touch screen, wherein the detection device is adapted to decode information upon interaction of the touch screen with an information carrier comprising a dielectric and/or conductive pattern which encodes the information, wherein the interaction is based on a difference in the dielectric coefficient and/or the conductivity of the pattern.

2. A detection device according to claim 1, wherein the detection device is adapted to detect whether the information carrier interacts with the detection device.

3. A system comprising:

   an information carrier comprising a dielectric and/or conductive pattern which encodes information; and
   a detection device having a touch screen; the detection device being adapted to decode the information upon interaction between the information carrier and the touch screen, wherein the interaction is based on a difference in the dielectric coefficient and/or the conductivity of the pattern.

4. A system according to claim 3, wherein the interaction between the information carrier and the touch screen is a capacitive interaction.

5. A system according to any of claims 3 to 4, wherein the detection device is a detection device according to any of claims 1 to 2.

6. A method with the following steps:

   providing one or more information carrier(s) with a dielectric and/or conductive pattern and a detection device having a touch screen; and
   inducing an interaction between the information carrier and the touch screen, wherein the interaction is based on a difference in the dielectric coefficient and/or the conductivity of the pattern.

7. A method according to claim 6, wherein inducing an interaction generates a touch signal, preferably a capacitive touch signal.

8. A method according to any of claims 6 to 7, comprising a further step of decoding information encoded by the dielectric and/or conductive pattern by means of the detection device.

**9.** A method according to any of claims 6 to 8, wherein the interaction between the information carrier and the touch screen is a capacitive interaction.

**10.** A method according to any of claims 6 to 9, wherein inducing the interaction is achieved by bringing the information carrier and the touch screen into at least partial direct contact.

**11.** A method according to claim 10, wherein the interaction is induced by placing at least a part of the information carrier on at least part of the touch screen.

**12.** A method according to claim 10, wherein the interaction is induced by relative motion between the information carrier and the touch screen.

**13.** A method according to any of the claims 6 to 12, wherein inducing the interaction is achieved by bringing the information carrier into proximity of the touch screen, preferably within 2 cm of the touch screen.

**14.** A method according to any of the claims 6 to 13, wherein the pattern comprises a pixel structure, wherein the pixels in the pixel structure preferably correspond to logic high and/or logic low

**15.** A method according to any of the claims 6 to 14, wherein the signal is decoded by the detection device, wherein the signal decoding is preferably performed by an adapted algorithm.

**16.** Computer program comprising program code means for performing the following steps when said program is run on a detection device having touch screen: decoding a signal detected by the touch screen of the detection device to retrieve data representing information encoded in the signal; and inducing an event in the detection device based on the retrieved data.

**Fig. 1**

**Fig. 2**

**Fig. 3**

**Fig. 4**

Fig. 5a

Fig. 5b

Fig. 6

**Fig. 7**

Fig. 8

Fig. 9

**Fig. 10**

**Fig. 11a**

**Fig. 11b**

**Fig. 11c**

Fig. 12

Fig. 13a

Fig. 13b

**Fig. 14**

**Fig. 15**

**Fig. 16**

**Fig. 17**

**Fig. 18**

**Fig. 19**

**Fig. 20**

**Fig. 21a**

**Fig. 21b**

**Fig. 21c**

**Fig. 22**

**Fig. 23**

**Fig. 24**

data processing system

data processing system

software

actions

touchscreen

simple information carrier

**Fig. 25**

**Fig. 26**

Europäisches
Patentamt

European
Patent Office

Office européen
des brevets

# EUROPEAN SEARCH REPORT

**Application Number**

EP 10 19 3023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2010/045627 A1 (KENNEDY PETER [US]) 25 February 2010 (2010-02-25) * paragraphs [0010] - [0015], [0027] - [0058]; figures 1-6 * | 1-16 | INV. G06K7/08 G06K19/067 |
| A | EP 2 088 532 A1 (VOIGT SASCHA [DE]; THIELE JAN [DE]) 12 August 2009 (2009-08-12) * paragraphs [0008] - [0023], [0031], [0032]; figures 4,6,8,12 * | 1-16 | |
| X | WO 2007/146779 A2 (APPLE INC [US]; HOTELLING STEVEN P [US]; CHEN WEI [US]; KRAH CHRISTOPH) 21 December 2007 (2007-12-21) | 16 | |
| A | * paragraphs [0120], [0124] - [0128]; figure 2 * | 1-15 | |

**TECHNICAL FIELDS SEARCHED (IPC)**

G06K

The present search report has been drawn up for all claims

| Place of search | Date of completion of the search | Examiner |
|---|---|---|
| Munich | 18 April 2011 | Koegler, Lutz |

EPO FORM 1503 03.82 (P04C01)

**ANNEX TO THE EUROPEAN SEARCH REPORT
ON EUROPEAN PATENT APPLICATION NO.** EP 10 19 3023

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2011

| Patent document cited in search report | | Publication date | Patent family member(s) | | Publication date |
|---|---|---|---|---|---|
| US 2010045627 | A1 | 25-02-2010 | US | 7683888 B1 | 23-03-2010 |
| EP 2088532 | A1 | 12-08-2009 | NONE | | |
| WO 2007146779 | A2 | 21-12-2007 | AU | 2007257869 A1 | 21-12-2007 |
| | | | AU | 2008101177 A4 | 08-01-2009 |
| | | | CN | 101467119 A | 24-06-2009 |
| | | | CN | 101467120 A | 24-06-2009 |
| | | | CN | 101501613 A | 05-08-2009 |
| | | | CN | 101501618 A | 05-08-2009 |
| | | | DE | 112007001290 T5 | 02-07-2009 |
| | | | EP | 2027526 A2 | 25-02-2009 |
| | | | EP | 2027528 A2 | 25-02-2009 |
| | | | GB | 2455179 A | 03-06-2009 |
| | | | GB | 2455208 A | 03-06-2009 |
| | | | GB | 2456221 A | 15-07-2009 |
| | | | KR | 20090028626 A | 18-03-2009 |
| | | | KR | 20090019903 A | 25-02-2009 |
| | | | WO | 2007146783 A2 | 21-12-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010043422 A
- WO 2010051802 A
- US 20100045627 A